# EUROPEAN PATENT APPLICATION

(11) **EP 4 583 196 A1**
(43) Date of publication of application: **09.07.2025**
(21) Application number: 23860696.6
(22) Date of filing: 26.07.2023
(51) Int. Cl.: H01M 4/36, H01M 4/38, H01M 4/587, C01B 33/02, H01M 4/02

(54) **SILICON-CARBON COMPOSITE FOR SECONDARY BATTERY NEGATIVE ELECTRODE MATERIAL, AND METHOD FOR PREPARING SAME**

(30) Priority: 30.08.2022 KR 20220109473
(71) Applicant: OCI Company Ltd., Seoul 04532 (KR)
(72) Inventor: CHANG, Joonhyun, Seongnam-si Gyeonggi-do 13212 (KR); NOH, Minho, Seongnam-si Gyeonggi-do 13212 (KR); OH, Minkyung, Seongnam-si Gyeonggi-do 13212 (KR); CHI, Eunok, Seongnam-si Gyeonggi-do 13212 (KR)
(74) Representative: Zacco Sweden AB
(86) International application number: PCT/KR2023/010868
(87) International publication number: WO 2024/049015

(57) **Abstract**

The present invention relates to a silicon-carbon composite for a secondary battery negative electrode material, and a method for preparing same, the silicon-carbon composite being capable of improving the initial discharge capacity (IDC), initial efficiency (ICE), and lifespan characteristics of a secondary battery. Specifically, the present invention may provide a silicon-carbon composite and a secondary battery negative electrode material comprising same, wherein the silicon-carbon composite is formed from a silicon-pitch composite comprising nano-silicon particles and high softening point pitch, the average particle diameter (D50) of the nano-silicon particles is 150 nm or less, the softening point of the high softening point pitch is 200-300°C, and the average particle diameter (D50) of the high softening point pitch is 0.5-2µm.

## Description

### FIELD

The present disclosure relates to a silicon-carbon composite for a negative electrode material of a secondary battery, which can improve initial discharge capacity (IDC), initial efficiency (ICE), and lifespan characteristics of the secondary battery, and a method for preparing the same.

### DESCRIPTION OF RELATED ART

The performance improvement of the secondary battery is based on the components of the negative electrode material, the negative electrode material, and the electrolyte solution.

The graphite-based material mainly used as the negative electrode material among the above components has excellent electrochemical performance and low cost and thus is commercially available. However, since the theoretical capacity of the graphite-based material is limited to 370 mAh/g, there is a limit to application thereof to a high-capacity secondary battery.

In order to overcome the above limitation, a non-graphite-based negative electrode material such as silicon, tin, and germanium have emerged as alternative materials thereto as the negative electrode material. Among them, silicon has a theoretical capacity of 4000 to 4200 mAh/g and has a high capacity of almost 10 times or greater of that of the graphite, and thus is in the spotlight as a material for replacing graphite. However, compared to its high theoretical capacity, a large volume expansion of about 400% of the silicon occurs during the charging and discharging process, resulting in structural destruction of the material and low lifespan.

A method of alleviating the volume expansion of silicon includes a method for preparing a carbon-silicon composite by mixing a carbon material with silicon. Applying the composite as the negative electrode material for the secondary battery to improve the performance of the secondary battery is emerging as an important task.

For example, a method for forming a slurry including nano silicon (nano Si) particles into spherical powder particles and then coating the surface of the spherical powder particles with a pitch as a carbon material has been developed. There is a need to develop a high-quality silicon-carbon composite for a negative electrode material of a secondary battery and a method for preparing the same, in which the characteristics of the composite using the nano-silicon particles and the pitch is adjusted to further improve the initial discharge capacity, initial efficiency, and lifespan characteristics of the secondary battery.

### DISCLOSURE

### TECHNICAL PURPOSE

A purpose of the present disclosure is to provide a silicon-carbon composite for a secondary battery negative electrode material prepared using a silicon-pitch composite including nano silicon particles and a high softening point pitch, and a method for preparing the same.

Another purpose of the present disclosure is to provide a negative electrode material for a secondary battery including the above silicon-carbon composite to improve the initial discharge capacity, initial efficiency, and lifespan characteristics of the secondary battery, a negative electrode for a secondary battery including the same, and a secondary battery including the negative electrode.

Purposes according to the present disclosure are not limited to the above-mentioned purpose. Other purposes and advantages according to the present disclosure that are not mentioned may be understood based on following descriptions, and may be more clearly understood based on embodiments according to the present disclosure. Further, it will be easily understood that the purposes and advantages according to the present disclosure may be realized using means shown in the claims or combinations thereof.

### TECHNICAL SOLUTION

According to one aspect of the present disclosure, a silicon-carbon composite for a negative electrode material of a secondary battery may be provided, wherein the composite is formed from a silicon-pitch composite comprising nano silicon particles and a high softening point pitch, wherein an average particle diameter (D50) of the nano-silicon particles is 150 nm or smaller, wherein a softening point of the high softening point pitch is in a range of 200 to 300°C, and an average particle diameter (D50) of the high softening point pitch is in a range of 0.5 to 2 µm.

According to another aspect of the disclosure,
a method for preparing a silicon-carbon composite for a secondary battery negative electrode material may be provided, wherein the method includes:
(a) mixing a high softening point pitch having a softening point of 200 to 300°C with a solvent to prepare a mixture, and then performing wet pulverization of the mixture to prepare a pulverized pitch slurry in which an average particle diameter (D50) of the pulverized pitch is in a range of 0.5 to 2 µm;
(b) mixing silicon particles with a solvent to prepare a mixture and then pulverizing the mixture to prepare a nano-silicon particle slurry in which an average particle diameter (D50) of the nano-silicon particle is in a range of 150 nm or smaller;
(c) mixing the pulverized pitch slurry prepared in the (a) and the nano silicon particle slurry prepared in the (b) with each other to form a pitch-silicon particle mixed slurry;
(d) drying the pitch-silicon particle mixed slurry to form spherical powder particles; and
(e) carbonizing the spherical powder particles.

According to still another aspect of the present disclosure, a negative electrode material for a secondary battery including the silicon-carbon composite prepared using the silicon-pitch composite according to one aspect of the present disclosure may be provided.

### TECHNICAL EFFECT

The silicon-carbon composite which is a negative electrode material for a secondary battery according to the present disclosure may have the optimized size and content of the pores present inside the composite, thereby improving the initial discharge capacity, initial efficiency, and lifetime characteristics of the secondary battery including the composite as the negative electrode material.

In addition to the above-described effects, specific effects of the present disclosure will be described together while describing specific details for implementing the present disclosure.

### BRIEF DESCRIPTION OF DRAWINGS

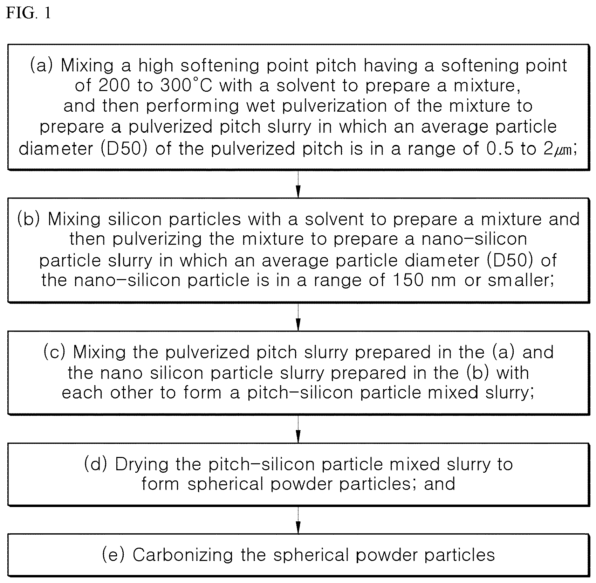

FIG. 1 is a flowchart illustrating a method for preparing a secondary battery negative electrode material according to an embodiment of the present disclosure.
FIGS. 2 and 3 are graphs obtained by analyzing diameters of a pulverized pitch and a nano-silicon particle of Present Example 1, respectively.
FIGS. 4 to 6 respectively show SEM images of the silicon-carbon composite prepared in Present Example 1.
FIG. 7 is a graph obtained by analyzing the diameter of the pulverized pitch of Comparative Example 1.
FIG. 8 shows a SEM image of the silicon-carbon composite prepared in Comparative Example 1.
FIG. 9 shows a SEM image of the silicon-carbon composite prepared in Present Example 2.
FIG. 10 shows a SEM image of the silicon-carbon composite prepared in Comparative Example 2.
FIG. 11 shows a graph (vertical axis: 50 cycle specific capacity, horizontal axis: number of cycles) on lifetime characteristics in 50 cycles of each of Present Examples 1 and 2 and Comparative Examples 1 and 2.

### DETAILED DESCRIPTIONS

The above-described purposes, features, and advantages will be described in detail with reference to the accompanying drawings, and accordingly, a person having ordinary skill in the art to which the present disclosure pertains will be able to easily implement the technical idea of the present disclosure. In the description of the present disclosure, when it is determined that a detailed description of a known technology related to the present disclosure may unnecessarily obscure the gist of the present disclosure, the detailed description thereof will be omitted. Hereinafter, preferred embodiments according to the present disclosure will be described in detail with reference to the accompanying drawings. In the drawings, the same reference numerals are used to indicate the same or similar components.

The description of the contents that may be sufficiently technically inferred by a person having ordinary skill in the art among the contents not described in the present disclosure, will be omitted.

Hereinafter, it will also be understood that when a first element or layer is referred to as being present "on top of or under" a second element or layer, the first element may be disposed directly on top of or under the second element or may be disposed indirectly on top or under the second element with a third element or layer being disposed between the first and second elements or layers.

It will be understood that when a first element or layer is referred to as being "connected to", or "coupled to" a second element or layer, the first element may be directly connected to or coupled to the second element or layer, or one or more intervening elements or layers may be present therebetween.

In the present disclosure, the term "silicon-pitch composite" refers to a composite material in which silicon and pitch are mixed with each other, and the term "silicon-carbon composite" may refer to a composite material obtained by performing a carbonization process on the silicon-pitch composite to convert the pitch to the carbon.

In the present disclosure, "average particle diameter" may mean "D50" measured using a particle size analyzer (LS 13 320 Laser Diffraction Particle Size Analyzer as manufactured by BECKMAN COULTER Co. Ltd). D50 was used to define and measure the size of the pitch particle, the silicon particle and the finally prepared silicon-carbon composite in the present disclosure.

In the present disclosure, the "average diameter" is used for defining the size of "a pore" of the silicon-carbon composite of the present disclosure, and may be measured according to <measurement method 2: pore size and porosity> as described below in the present disclosure.

Hereinafter, a silicon-carbon composite for a negative electrode material of a secondary battery according to the present disclosure and a method for preparing the same will be described in detail.

### <Silicon-Carbon Composite for Secondary Battery Negative electrode Material>

The silicon-carbon composite which is a negative electrode material for a secondary battery according to an aspect of the present disclosure may be made of a silicon-pitch composite including nano silicon particles and a high softening point pitch. In order to prepare the silicon-carbon composite which is a negative electrode material for a secondary battery, a slurry prepared by mixing the silicon particles and the pitch with each other is formed into spherical powder particles as the silicon-pitch composite which in turn is subjected to carbonization.

In the carbonization process, the silicon particles remain in the skeleton, and the high softening point pitch undergoes a volume (weight) reduction of 30 to 50% during the carbonization such that pores are generated in a portion of an area in which the pitch has been present in the shape of the pitch before carbonization, and the pitch is converted to the carbon during the carbonization. In this regard, when the composite is prepared by dissolving a high softening point pitch in a solvent, the pitch may be uniformly coated on the nano silicon particles before the carbonization, and thus, the amount of pores as generated is reduced, and the size of the final pores is small and the porosity is lowered even after carbonization.

The inventor of the present disclosure has identified that the performance of the battery can be further improved when the finally prepared silicon-carbon composite is applied to the secondary battery as a negative electrode material by adjusting the size of the pitch included in the silicon-pitch composite used to prepare the negative electrode material for the secondary battery, and accordingly adjusting the size and content of the pores generated in the composite. In this manner, the present disclosure has been completed.

Specifically, the silicon-carbon composite which is a negative electrode material for a secondary battery according to the present disclosure may be prepared from the silicon-pitch composite including nano silicon particles and a high softening point pitch. In this regard, it is preferable that the average particle diameter (D50) of the nano-silicon particles is in a range of 150 nm or smaller, and the lower limit of the average particle diameter (D50) is not particularly limited, but it is preferable that the average particle diameter is about 50 nm or larger in consideration of the nano-silicon particles generally used in the art. The softening point of the high softening point pitch may be in a range of 200 to 300°C, and the average particle diameter (D50) of the high softening point pitch is preferably in a range of 0.5 to 2 µm. If the average particle diameter is smaller than 0.5 µm and the size of the pitch is too small, the porosity of the silicon-carbon composite finally prepared after the carbonization may be lowered. if the average particle diameter is greater than 2 µm and the size of the pitch is too large, the pores of the silicon-carbon composite finally prepared after the carbonization may become too large.

In particular, the silicon-carbon composite of the present disclosure is characterized in that it includes pores generated by carbonizing the high softening point pitch. It is experimentally identified that the fact that the average diameter of the pores is preferably 0.2 µm or larger is applied to a negative electrode material for a secondary battery to improve the performance of a secondary battery. In addition, in the silicon-pitch composite as finally prepared, the pores may be dependent on the size of the pitch, and the average particle diameter (D50) of the silicon-carbon composite as finally prepared may be in a range of, for example, 3 to 10 µm, and for example, 6 to 10 µm.

It is preferable that the 'average diameter' of the pores is 1/10 or smaller of the average particle diameter (D50) of the finally prepared silicon-carbon composite, and the 'maximum diameter' of the pores is preferably 1/2 or smaller of the average particle diameter (D50) of the silicon-carbon composite. When this range is not satisfied, the pores may not be evenly formed around the silicon particles, and thus, when the composite is applied as an anode material for a secondary battery, silicon expansion may not be efficiently controlled when the secondary battery is charged. Accordingly, the efficiency and lifetime of the secondary battery may be reduced.

The porosity of the pores of the silicon-carbon composite is preferably in a range of 20 to 50%, for example 30 to 40%. It has been experimentally identified that when both the range of the porosity and the range of the pore size are satisfied, the composite may be applied as a negative electrode material for a secondary battery in an optimized manner to improve the performance of the secondary battery.

The silicon-carbon composite may have a surface area (BET) of, for example, 10 to 30 m²/g, for example, 15 to 30 m²/g, and for example, 18 to 25 m²/g. When the surface area (BET) is smaller than 10 m²/g, there may be a problem in that the initial efficiency is lowered because the contact area of the composite with the electrolyte is small when the composite is applied to the secondary battery. When the surface area (BET) exceeds 30 m²/g, a solid electrolyte interphase layer (SEI) is easily formed in a large amount due to an increase in the contact area of the composite with the electrolyte when the composite is applied to the secondary battery, and thus the electrolyte is quickly consumed, thereby reducing the lifespan of the secondary battery.

The silicon-carbon composite may have a tap density of, for example, 0.5 to 1 g/cm², and for example, 0.5 to 0.8 g/cm². When the tap density is smaller than 0.5 g/cm², the energy density may be lowered, and thus, when the composite is applied to the secondary battery, the capacity of the battery may be reduced under the same volume condition. Conversely, when the tap density is greater than 1 g/cm², the porosity may be lowered. Thus, when the composite is applied to the secondary battery, the lifespan of the secondary battery may be reduced due to an insufficient space in which silicon expands during charging and discharging of the secondary battery.

In addition, since the silicon-carbon composite may be used as the negative electrode material for the secondary battery, the present disclosure may provide the negative electrode material for the secondary battery including the silicon-carbon composite, and the secondary battery including the same.

### < Method for preparing Silicon-Carbon Composite for Secondary Battery Negative electrode Material >

According to another aspect of the disclosure,
a method for preparing a silicon-carbon composite for a secondary battery negative electrode material may be provided, wherein the method includes:
(a) mixing a high softening point pitch having a softening point of 200 to 300°C with a solvent to prepare a mixture, and then performing wet pulverization of the mixture to prepare a pulverized pitch slurry in which an average particle diameter (D50) of the pulverized pitch is in a range of 0.5 to 2 µm;
(b) mixing silicon particles with a solvent to prepare a mixture and then pulverizing the mixture to prepare a nano-silicon particle slurry in which an average particle diameter (D50) of the nano-silicon particle is in a range of 150 nm or smaller;
(c) mixing the pulverized pitch slurry prepared in the (a) and the nano silicon particle slurry prepared in the (b) with each other to form a pitch-silicon particle mixed slurry;
(d) drying the pitch-silicon particle mixed slurry to form spherical powder particles; and
(e) carbonizing the spherical powder particles.

In this regard, the solvent has preferably insolubility of the pitch of the high softening point. When a solvent having solubility of the pitch of the high softening point is used, the pitch is completely dissolved in the solvent, and thus the size of the particles of the pitch is excessively decreased and thus the density of the pitch coating composed thereof becomes excessively high, and thus there is a problem in that it is difficult to achieve the size and porosity of pores as desired in the present disclosure. Specific examples of the solvent having the insolubility of the pitch of the high softening point may include one or more selected from solvents such as ethanol, methanol, acetone, and isopropyl alcohol, but are not necessarily limited thereto.

The solid content in the pitch-silicon particle mixed slurry formed in the (c) may be in a range of, for example, 10 to 30 wt%, for example, 15 to 20 wt%. If the above range is not satisfied, there may be a problem in that spherical powder particles having a desired size and size distribution may not be obtained.

In order to form the slurry containing silicon into the spherical powder particles, the (d) of drying the slurry may be performed to prepare the silicon-pitch composite. In the (d), the drying method is not particularly limited as long as the spherical powder particles can be formed by the drying method. In one example, preferably, the drying method may be performed in the spray drying manner. The spray drying method is a technique of rapidly drying a liquid material using hot air to prepare a powder state material, and may be performed using spray dryer equipment including a sprayer that particulates the liquid material into fine particles, a heater, and a dryer. The spray drying method may adjust the particle size, shape, etc. according to various conditions such as experimental conditions and liquid state, and is suitable for mass production. The average particle diameter of the prepared spherical powder particles may be selected according to the use of the negative electrode material to be used, but may be preferably in a range of 3 to 20 µm, for example, 5 to 10 µm.

Performing the (e) of carbonizing the mixed slurry of the high softening point pitch and the nano-silicon particles, the silicon-carbon composite for the negative electrode material of the secondary battery may be finally obtained. For example, the carbonization may be carried out by raising the temperature to a temperature of 1000 to 1100°C under an inert gas atmosphere (e.g., a nitrogen atmosphere) and then maintaining the raised temperature for about 1 hour. In this regard, a temperature increase rate may be, for example, 5 to 10°C. When the carbonization temperature is increased, the effect of removing impurities and removing pitches is higher. However, when the carbonization temperature exceeds 1100°C, SiC may be formed. Thus, the carbonization temperature may be preferably in a range of 1000 to 1100°C.

In addition, after carbonization in the (e), the content of the silicon nanoparticles in the solid content may be in a range of, for example, 50 to 90 wt%, for example, 60 to 80 wt%, and for example, 65 to 75 wt%. If the content of the silicon nanoparticles in the solid content is smaller than 50 wt%, there may be a problem in that the capacity is reduced when the composite is applied as a negative electrode material for a secondary battery, and there may be a problem in that the silicon-pitch composites are entangled with each other during the carbonization process due to an increase in the content of the pitch. When the content of the silicon nanoparticles in the solid content exceeds 90 wt%, the content of the pitch is too low, and thus the attachment (coating) of the pitch to the silicon particles may be poor. Accordingly, when the composite is applied as a negative electrode material for a secondary battery, the silicon particles are directly exposed to an electrolyte solution to rapidly form an SEI layer, thereby reducing the lifespan of the secondary battery.

The silicon-carbon composite prepared by the method for preparing the silicon-carbon composite for the secondary battery negative electrode material as described above may have the same characteristics as those as described above in detail with respect to the **<Silicon-carbon composite for secondary battery negative electrode material>.**

### EXAMPLES

Hereinafter, the configuration and effects of the present disclosure will be described in more detail through preferred Examples of the present disclosure. However, this is presented as a preferred example of the present disclosure and cannot be interpreted as limiting the present disclosure thereto in any sense.

### I. Preparation Example: Preparation of Silicon-Carbon Composite

### Present Example 1

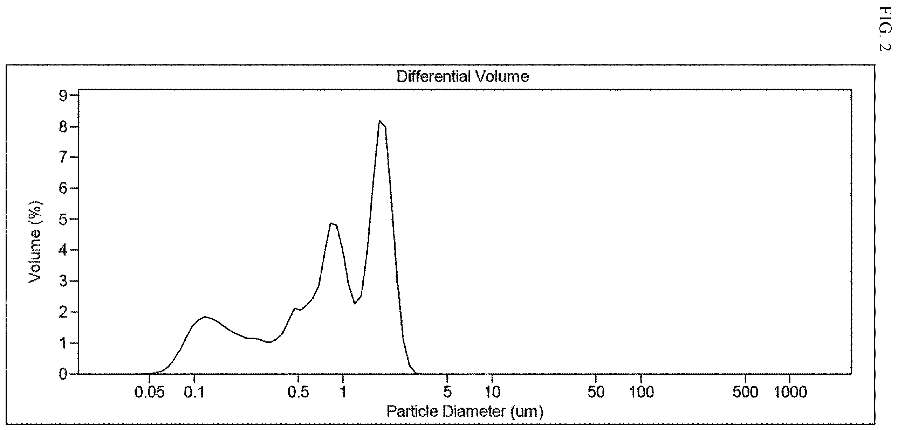

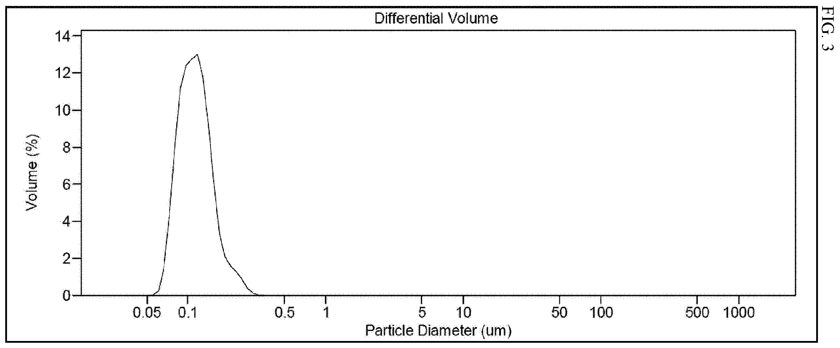

1) 530 g of a high softening point pitch (HSPP, OCI, softening point 250°C) was mixed with 3,000 g of ethanol and a mixed solution was sufficiently stirred for 1 hour. Then, Zr beads (average diameter of 0.5 mm, 2 kg) and the mixed solution were put into a bead mill (UBM-1L, NanoIntec), and milling was performed thereon at 3000 rpm for 3 hours to prepare a pulverized pitch slurry. As shown in FIG. 2, the average diameter D50 of the pulverized pitch of Present Example 1 was 0.921 µm.
2) 600 g of silicon particles (OCI, a maximum average size of the particles is 100 µm or smaller) and 2,700g of ethanol and 60 g of stearic acid were mixed with each other and a mixed solution was sufficiently stirred for 1 hour. Then, Zr beads (average diameter of 0.5 mm, 2 kg) and the mixed solution were put into a bead mill (UBM-1L, NanoIntec) and milling was performed thereon at 3000 rpm for 2 hours, so that the average particle diameter of the silicon particles was 2 µm or smaller. Then, Zr beads (average diameter of 0.1 mm, 2 kg) and the mixed solution were put into Nano mill (NPM-1L, NanoIntec) and milling was performed thereon at 3000 rpm for 4 hours to prepare a nano silicon particle slurry so that the average particle diameter of the silicon particles was 150 nm or smaller. As shown in FIG. 3, the average diameter (D50) of the nano-silicon particles of Present Example 1 was 0.111 µm.
3) 80 g of the pulverized pitch slurry (weight of only the pulverized pitch is 15 g) prepared in the 1) and 100g of the nano-silicon particle slurry prepared in the 2) were mixed with each other using a homogenizer to prepare a pitch-silicon particle mixed slurry, and 110g of ethanol was added thereto so that the solid content in the mixed slurry was 20 wt%.
4) The mixed slurry was spray-dried using a spray dryer and with an in-let air 100°C two-fluid nozzle (2.4 bar) at 30ml/min to convert the slurry prepared in the 3) into a liquid droplet, and then the solvent of the liquid droplet was evaporated away therefrom to obtain a silicon-pitch composite as the spherical powder particles having an average diameter of 3 to 10 µm.
5) Subsequently, the temperature was raised to a temperature of 1000 to 1100°C at a rate of 5°C under a nitrogen atmosphere and the raised temperature was maintained for 1 hour to carbonize the spherical powder particles, thereby finally preparing the silicon-carbon composite. In this regard, the content of the silicon nanoparticles in the solid content was 70 wt%.

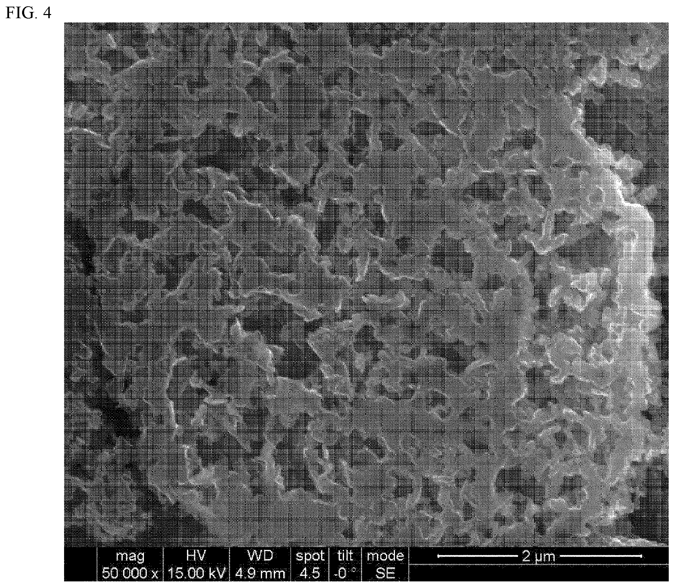

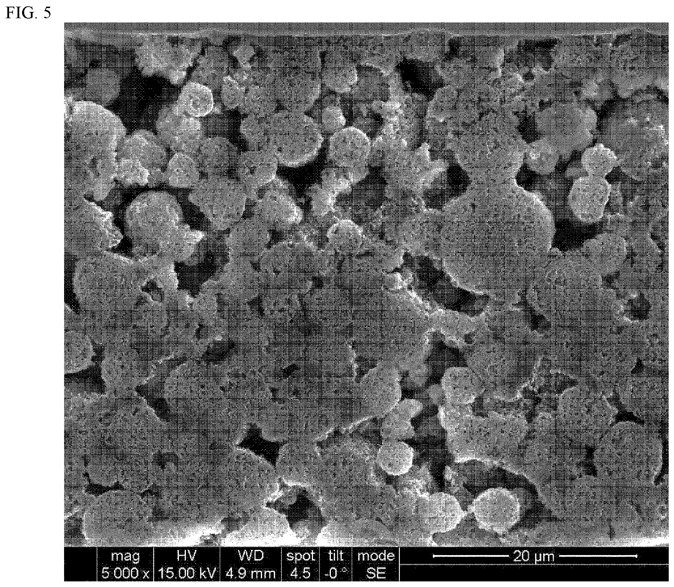

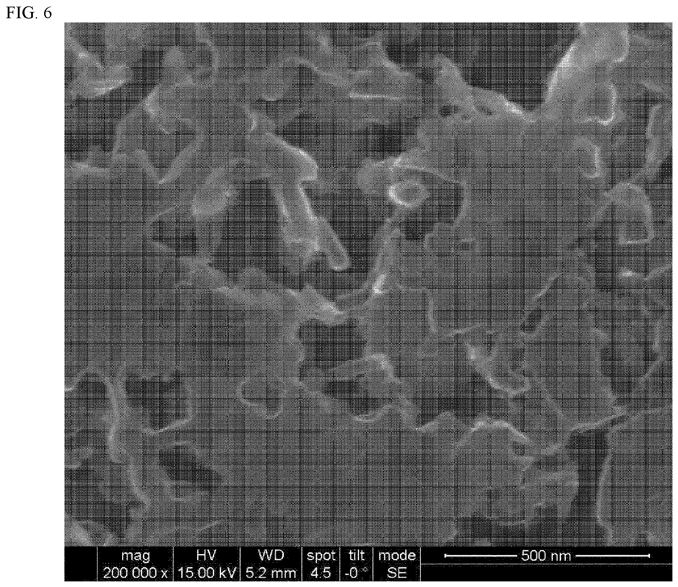

The cross-section of the silicon-carbon composite according to Present Example 1 was observed using SEM, and the SEM images taken at different magnification ratios are shown in FIGS. 4 to 6, respectively.

### Comparative Example 1

A silicon-carbon composite was prepared in the same manner as in Present Example 1, except that when preparing the slurry in the 1), the preparation of the completely pulverized pitch dissolved in the solvent was replaced with following 1'), thereby preparing the pulverized pitch having a smaller average particle diameter.

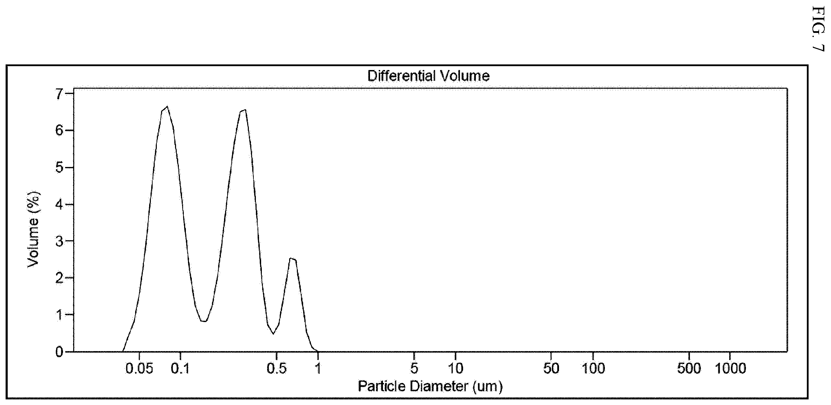

1') 530 g of the high softening point pitch (HSPP, OCI, softening point 250°C) was mixed with 3,000g of ethanol and a mixed solution was sufficiently stirred for 1 hour. Then, Zr beads (average diameter of 0.5 mm, 2 kg) and the mixed solution were put into a bead mill (UBM-1L, NanoIntec), and milling was performed thereon at 3000 rpm for 3 hours. Then, Zr beads (diameter of 0.1 mm, 2 kg) and the mixed solution were put together in Nano mill (NPM-1L, NanoIntec) and milling was performed thereon for 3000 rpm and 4 hours to prepare a pulverized pitch slurry so that the average particle diameter (D50) of the pitch particles was 0.5 µm or smaller. Based on a result of actual measurement, the average particle diameter (D50) of the pulverized pitch of Comparative Example 1 was 0.182 µm as shown in FIG. 7.

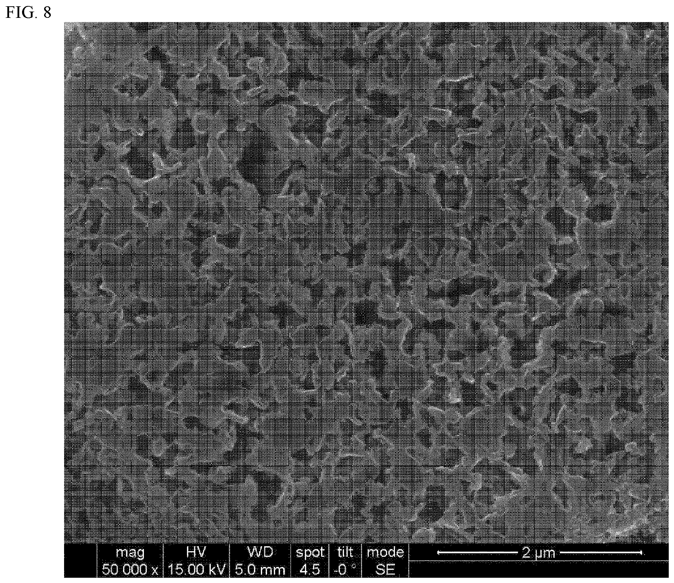

The cross-section of the silicon-carbon composite according to Comparative Example 1 was observed using SEM, and the photographed SEM image is shown in FIG. 8.

### Present Example 2

A silicon-carbon composite was prepared in the same manner as in Present Example 1, except that there was a difference only in that the pulverized pitch slurry of Present Example 1 and the pulverized pitch slurry of Comparative Example 1 were mixed with each other at a ratio of 1:1. The pitch size of Present Example 2 was 0.5515 µm which is an average value of the pitch size (0.921 µm) of Present Example 1 and the pitch size (0.182 µm) of Comparative Example 1.

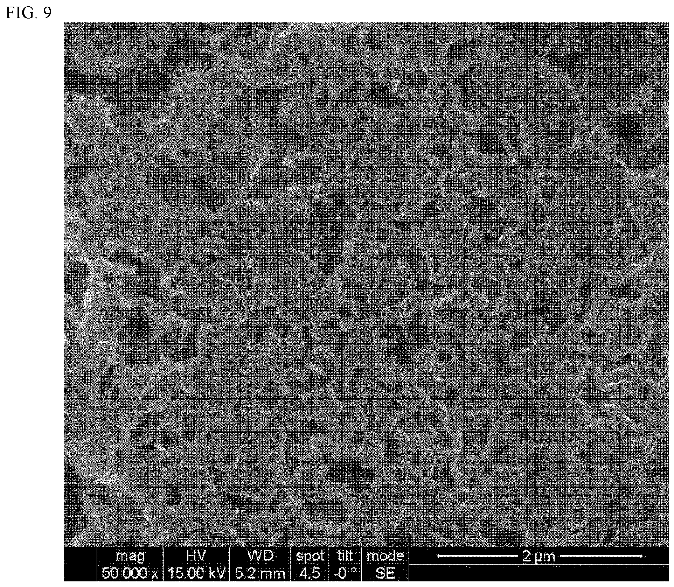

The cross-section of the silicon-carbon composite according to Present Example 2 was observed using SEM, and the photographed SEM image is shown in FIG. 9.

### Comparative Example 2

A silicon-carbon composite was prepared in the same manner as in Present Example 1, except that there was a difference in that the preparation of the slurry in the 3) was replaced with following 3') such that the pitch was completely dissolved in the solvent. Specifically, ethanol having the insolubility of the pitch was used as the solvent in Present Example 1, whereas tetrahydrofuran (THF) having the solubility of the pitch was used as the solvent in Comparative Example 2. Accordingly, in Comparative Example 2, the silicon-carbon composite was prepared in such a way that the pitch was completely dissolved in the solvent and then dried and coated on the nano-silicon particles.

3') 80 g of the pulverized pitch slurry prepared in the 1) (weight of only the pulverized pitch is 15 g) was completely dissolved in 150g of THF, and then 100g of the nano silicon particle slurry prepared in the 2) was added thereto and the two slurries were mixed with each other using a homogenizer to prepare the pitch-silicon particle mixed slurry. In this regard, the solid content in the mixed slurry was 20 wt%.

A content of the silicon nanoparticles in the solid content finally prepared after the steps 4) and 5) in Comparative Example 2 was 70 wt%.

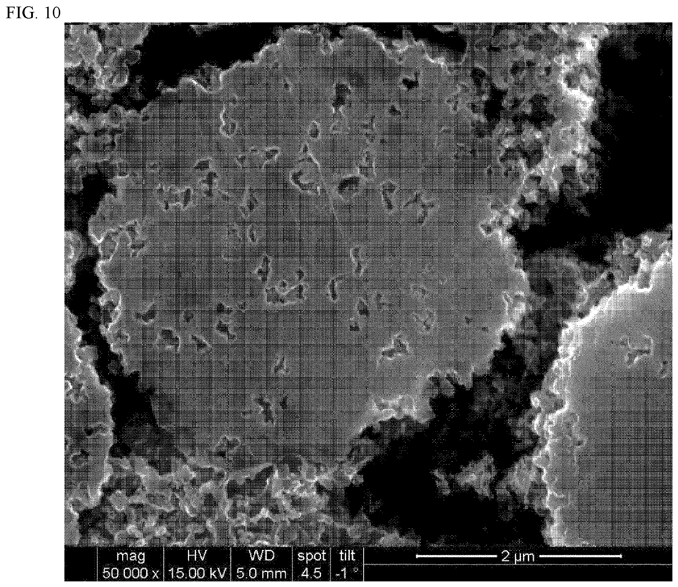

The cross-section of the silicon-carbon composite according to Comparative Example 2 was observed using SEM, and the photographed SEM image is shown in FIG. 10.

### II. Experimental Example: Measurement of Surface Characteristics of Silicon-Carbon Composite

The surface area (BET), tap density, pore size, and porosity were measured on the silicon-carbon composites of Present Examples 1 and 2 and Comparative Examples 1 and 2, and shown in the following Table 1. In this regard, the surface area (BET) was measured based on ASTM D-6556, and other values are measured as described below.

### < Measurement Method 1: Surface Area (BET) and Tap density >

The surface area (BET) of the silicon-carbon composite was measured according to ASTM D-6556 using a specific surface area analyzer (Belsorp-max as manufactured by BEL Japan).

In addition, 30 g of the sample was put in 100 ml mess cylinder, a tap density measuring device (JV2000 as manufactured by Copley) was used to perform tapping thereon for 10 minutes, a scale was read, and the tapping was then performed again for 10 minutes. This process was repeated until the volume change was within 2%. Then, the tap density was measured.

### < Measurement Method 2: Pore Size and Porosity >

In the silicon-carbon composite cross-sectional SEM image (5000x magnification), a line was drawn on the particles of the finally prepared silicon-carbon composite using the 'ImageJ' program, and the length of the pores of the silicon-carbon composite ("a portion other than the cross-section, which is empty or three-dimensionally visible is determined to be the pore) touching the line was measured and recorded. While drawing five or more lines, the lines did not overlap each other and were spaced from each other by a regular spacing. The average value of the measured pore lengths was taken as the pore size.

The percentage of the value obtained by dividing the 'total length of the line' drawn on the particles of the finally prepared silicon-carbon composite by the 'total sum of the measured pore lengths' was calculated as the porosity (%).

### < Measurement Method 3: Measurement of Average Particle Diameter (D50) of Final Silicon-Carbon Composite >

The silicon-carbon composite thus prepared was used as a negative electrode material, and the average particle diameter D50 [µm] thereof was measured using a particle size analyzer, 'LS 13 320 laser diffraction particle size analyzer' (as manufactured by BECKMAN COULTER Co., Ltd.), and is shown in Table 1 below.

**Table 1**

| | Surface area [m²/g] | Tap density [g/cm³] | Pore size [µm] | Porosity [%] | Average particle diameter of final negative electrode material (D50) [µm] |
|---|---|---|---|---|---|
| Present Example 1 | 19.0 | 0.62 | 0.270 | 38.8 | 5.795 |
| Present Example 2 | 23.2 | 0.61 | 0.225 | 35.9 | 5.410 |
| Comparative Example 1 | 21.9 | 0.62 | 0.177 | 32.7 | 5.575 |
| Comparative Example 2 | 7.8 | 0.64 | 0.083 | 7.3 | 6.139 |

As shown in Table 1, the silicon-carbon composites of Present Example 1 and Comparative Example 1 which have similar preparing methods and similar porosity, had similar surface area (BET) values, while the silicon-carbon composite of Comparative Example 2 in which the pitch was dissolved in the solvent and was spherically formed, the pore size and porosity were too small, and the surface area (BET) value was also low.

In addition, it may be identified that the size of the pores is proportional to the size of the pitch, and the porosity was also proportional to the size of the pitch, but there was no significant difference. The tap density was about 0.62 g/cm³ when the composite was prepared using the pulverized pitch. In the case of Comparative Example 2 in which the pitch was dissolved in the solvent, the porosity was low, and the tap density was also measured as having a relatively high value of 0.64 g/cm³.

### III. Half-Cell Test

In order to analyze the electrochemical characteristics of the negative electrode material for the secondary battery, the silicon-carbon composite prepared in each of Present Examples 1 and 2 and Comparative Examples 1 and 2 was used as the negative electrode material. A negative electrode plate using the silicon-carbon composite powders as an active material was fabricated. The negative electrode plate was fabricated by casting a slurry obtained by mixing the active material, a conductive material (Imerys Graphite & Carbon, Super-P), and a binder in a weight ratio of 94:1:5 on a copper foil. In this regard, the binder was obtained by mixing CMC and SBR with each other in a weight ratio of 3:7. The fabricated negative electrode plate and a Li metal as a counter electrode were used to manufacture a coin cell. The electrochemical characteristics thereof were checked. The charging/discharging conditions were charging CC/CV: 0.01V/0.01C, discharging CC 1.5V, and the rate was 0.2C.

A half-cell device-TOSCAT-3100 equipment was used to measure the initial coulombic efficiency (ICE; discharge amount relative to the initial charge amount), the initial charge capacity (ICC), and the initial discharge capacity (IDC) which are shown in Table 2 as set forth below.

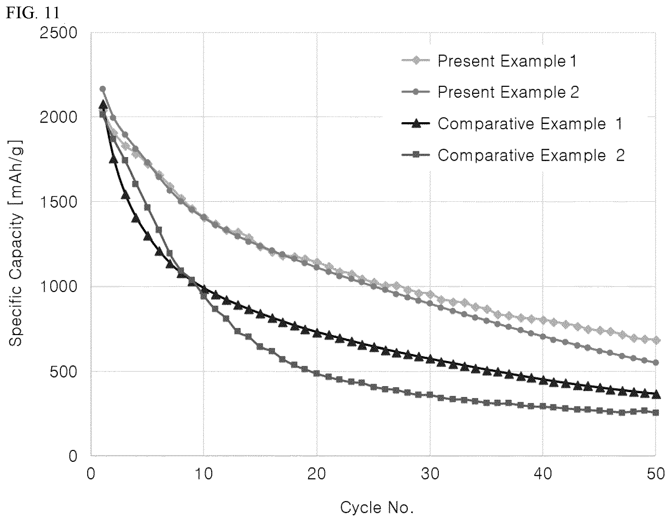

In addition, lifetime characteristics (50 cycle specific capacity) at 50 cycles were measured and shown in Table 2 as set forth and FIG. 11 (vertical axis: 50 cycle specific capacity, horizontal axis: cycle number).

In addition, a percentage (%) of a value obtained by dividing the 50-cycle specific capacity by the initial discharge capacity (IDC) is shown in Table 2 as set forth below. This percentage is used to check whether the lifespan characteristic is maintained even after 50 cycles compared to the initial discharge capacity. The higher the percentage value, the better the lifespan characteristic.

**Table 2**

| | ICE (%) | ICC (mAh/g) | IDC (mAh/g) | 50 cycles specific capacity (mAh/g) | 50 cycles specific capacity /IDC (%) |
|---|---|---|---|---|---|
| Present Example 1 | 85.8 | 2376 | 2038 | 685 | 33.6% |
| Present Example 2 | 85.4 | 2533 | 2162 | 549 | 25.4% |
| Comparative Example 1 | 84.8 | 2445 | 2074 | 366 | 17.7% |
| Comparative Example 2 | 85.3 | 2362 | 2014 | 255 | 12.6% |

As shown in Table 2 and FIG. 11, it was identified that when the silicon-carbon composite of each of Present Examples 1 and 2 according to the present disclosure was used as the negative electrode material, the performance of the battery, particularly, the life characteristics of the battery, was superior to that when the silicon-carbon composite of each of Comparative Examples 1 and 2 was used as the negative electrode material.

Although the present disclosure has been described above with reference to the accompanying drawings, the present disclosure is not limited by the embodiments disclosed herein and the drawings, and it is obvious that various modifications may be made by those skilled in the art within the scope of the technical idea of the present disclosure. In addition, although the effects based on the configuration of the present disclosure are not explicitly described above in the description of the embodiment of the present disclosure, it is obvious that predictable effects from the configuration should also be recognized.

## Claims

1. A silicon-carbon composite for a secondary battery negative electrode material, wherein the composite is formed from a silicon-pitch composite comprising nano silicon particles and a high softening point pitch,
wherein an average particle diameter (D50) of the nano-silicon particles is 150 nm or smaller,
wherein a softening point of the high softening point pitch is in a range of 200 to 300°C, and an average particle diameter (D50) of the high softening point pitch is in a range of 0.5 to 2µm.

2. The silicon-carbon composite for the secondary battery negative electrode material of claim 1, wherein the composite includes pores generated by carbonizing the pitch of the high softening point,
wherein an average diameter of the pores is in a range of 0.2µm or larger, and is in a range of 1/10 or smaller of the average particle diameter (D50) of the silicon-carbon composite,
wherein a maximum diameter of the pores is in a range of 1/2 or smaller of the average particle diameter (D50) of the silicon-carbon composite,
wherein the average particle diameter (D50) of the silicon-carbon composite is in a range of 3 to 10µm.

3. The silicon-carbon composite for the secondary battery negative electrode material of claim 1, wherein a porosity of the pores is in a range of 20 to 50%.

4. The silicon-carbon composite for the secondary battery negative electrode material of claim 1, wherein a surface area (BET) of the silicon-carbon composite is in a range of 10 to 30 m²/g, and a tap density of the silicon-carbon composite is in a range of 0.5 to 1 g/cm².

5. The silicon-carbon composite for the secondary battery negative electrode material of claim 2, wherein the average particle diameter (D50) of the silicon-carbon composite is in a range of 6 to 10µm.

6. A negative electrode material for a secondary battery, comprising a silicon-carbon composite for a secondary battery negative electrode material according to one of claims 1 to 5.

7. A secondary battery comprising a silicon-carbon composite for a secondary battery negative electrode material according to one of claims 1 to 5.

8. A method for preparing a silicon-carbon composite for a secondary battery negative electrode material, the method comprising:
(a) mixing a high softening point pitch having a softening point of 200 to 300°C with a solvent to prepare a mixture, and then performing wet pulverization of the mixture to prepare a pulverized pitch slurry in which an average particle diameter (D50) of the pulverized pitch is in a range of 0.5 to 2µm;
(b) mixing silicon particles with a solvent to prepare a mixture and then pulverizing the mixture to prepare a nano-silicon particle slurry in which an average particle diameter (D50) of the nano-silicon particle is in a range of 150 nm or smaller;
(c) mixing the pulverized pitch slurry prepared in the (a) and the nano silicon particle slurry prepared in the (b) with each other to form a pitch-silicon particle mixed slurry;
(d) drying the pitch-silicon particle mixed slurry to form spherical powder particles; and
(e) carbonizing the spherical powder particles.

9. The method for preparing the silicon-carbon composite for the secondary battery negative electrode material of claim 8, wherein the solvent has insolubility of the high softening point pitch.

10. The method for preparing the silicon-carbon composite for the secondary battery negative electrode material of claim 9, wherein the solvent having the insolubility of the high softening point pitch includes at least one selected from a group consisting of ethanol, methanol, acetone, and isopropyl alcohol.

11. The method for preparing the silicon-carbon composite for the secondary battery negative electrode material of claim 8, wherein a solid content in the pitch-silicon particle mixed slurry formed the (c) is in a range of 10 to 30 wt%.

12. The method for preparing the silicon-carbon composite for the secondary battery negative electrode material of claim 11, wherein a content of the silicon nanoparticles in the solid content after the carbonization in the (d) is in a range of 50 to 90 wt%.

13. The method for preparing the silicon-carbon composite for the secondary battery negative electrode material of claim 8, wherein the drying in the (d) is performed in a spray drying manner.

14. The method for preparing the silicon-carbon composite for the secondary battery negative electrode material of claim 8, wherein the carbonization is performed at a temperature of 1000 to 1100°C.

15. A silicon-carbon composite for a secondary battery negative electrode material prepared by the method according to one of claims 8 to 14, wherein the silicon-carbon composite for the negative electrode material includes pores generated by carbonizing the high softening point pitch,
wherein an average diameter of the pores is in a range of 0.2µm or larger, and is in a range of 1/10 or smaller of the average particle diameter (D50) of the silicon-carbon composite,
wherein a maximum diameter of the pores is in a range of 1/2 or smaller of the average particle diameter (D50) of the silicon-carbon composite,
wherein the average particle diameter (D50) of the silicon-carbon composite is in a range of 3 to 10µm.

16. The silicon-carbon composite for the secondary battery negative electrode material of claim 15, wherein a porosity of the pores is in a range of 20 to 50%.
